# EUROPÄISCHE PATENTANMELDUNG

(11) **EP 2 282 073 A1**
(43) Veröffentlichungstag der Anmeldung: **09.02.2011**
(21) Anmeldenummer: 09450127.7
(22) Anmeldetag: 08.07.2009
(51) Int. Cl.: F16C 33/10, F16C 33/24

(54) **Gleitlager**

(71) Anmelder: voestalpine Giesserei Linz GmbH, 4020 Linz (AT)
(72) Erfinder: Letschnik, Arnold, 4201 Gramastetten (AT)
(74) Vertreter: Jell, Friedrich

(57) **Zusammenfassung**

Es wird ein Gleitlager mit einem zum Aufnehmen von Gleitbelastungen vorgesehenen Träger (2) gezeigt, der eine wenigstens teilweise metallische Gleitfläche (3) sowie einen Speicher (6) zur Aufnahme von Schmiermittel (5) zum selbständigen Schmieren der Gleitfläche (3) aufweist. Um vorteilhafte Konstruktionsverhältnisse zu schaffen, wird vorgeschlagen, dass insbesondere durch Entbinderung aus mit Metall beschichteten Platzhaltern hergestellte Hohlkörper (8) aufweist, die sowohl miteinander zur Aufnahme von Schmiermittel (5) des Speichers (6) als auch mit der Gleitfläche (3) zur Aufnahme von Gleitbelastungen auf die Gleitfläche (3) in einem festen, insbesondere stoffschlüssigen Verbund (9) stehen.

## Beschreibung

Die Erfindung betrifft ein Gleitlager mit einem zum Aufnehmen von Gleitbelastungen vorgesehenen Träger, der eine wenigstens teilweise metallische Gleitfläche sowie einen Speicher zur Aufnahme von Schmiermittel zum selbständigen Schmieren der Gleitfläche.

Um eine selbständige Schmierung einer Gleitfläche eines Gleitlagers ermöglichen zu können, ist aus dem Stand der Technik bekannt (DE 298 23 665 U1), im Bereich der Gleitfläche eines Trägers mehrere Ausnehmungen einzubringen, in denen je ein Speicher mit Schmiermittel vorgesehen ist. Wirken nun Gleitkräfte mit mechanischen und/oder thermischen Gleitbelastungen auf die Gleitfläche, dann kann das Schmiermittel des Speichers selbständig auf die metallische Gleitfläche gelangen, so dass selbst bei hohen Gleitbelastungen für einen verminderten Verschleiß der metallischen Gleitfläche bzw. des Gleitlagers gesorgt werden kann. Nachteilig ist, dass die Belastungsfähigkeit durch die Ausnehmungen vermindert wird, so dass bei hohen Belastungen nur kleine Speicher vorgesehen werden können bzw. so lediglich eine geringe Selbstschmierung möglicht wird, was zu geringen Standzeiten führen kann. Dieser Nachteil ist sowohl auf eine verminderte Menge an gespeichertem Schmiermittel als auch auf ein vermindertes Ansprechen der Selbstschmierung aufgrund der reduzierten Anzahl an Ausnehmungen im Bereich der Gleitfläche zurückzuführen. Derartige Gleitlager weisen daher nachteilig Optimierungsgrenzen hinsichtlich einer hohen Belastungsfähigkeit und einer hohen Lebensdauer auf.

Aus dem Stand der Technik sind außerdem metallische, zellulare Werkstoffe bekannt, die aus einem festen Hohlkörperverbund besteht können. Ein derartiger Hohlkörperverbund kann beispielsweise durch eine Sinterung von zusammengefügten Hohlkörpern geschaffen werden, welche Hohlkörper sich durch ein Verfahren der Entbinderung (Pyrolyse oder Depolymersisation) von mit Metall beschichteten und organischen Platzhaltern bilden können, die auch unter Grünkörper bekannt sind. Von solch einem Hohlkörperverbund sind unter anderem eine hohe Porosität und eine hohe akustische und mechanische Dämpfungseigenschaft bekannt. Des Weiteren wird vorgeschlagen einen derartigen Hohlkörperverbund auch als Dichtung bei einer Strömungsmaschine zu verwenden (DE 102 21 114 C1). Eine Verwendung eines Hohlkörperverbunds bei einem Gleitlager ist dem Stand der Technik fremd.

Die Erfindung hat sich daher die Aufgabe gestellt, ein Gleitlager der eingangs geschilderten Art derart auf konstruktiv einfache Weise zu verbessern, dass trotz hoher Gleitbelastungen auf die Gleitfläche des Gleitlagers stets für eine ausreichende selbständige Schmierung der Gleitfläche gesorgt werden kann. Außerdem soll das Gleitlager auch bei hohen Gleitbelastungen eine hohe Lebensdauer bzw. Standzeit gewährleisten können.

Die Erfindung löst die gestellte Aufgabe dadurch, dass der Speicher mehrere, insbesondere durch Entbinderung aus mit Metall beschichteten Platzhaltern hergestellte Hohlkörper aufweist, die sowohl miteinander zur Aufnahme von Schmiermittel des Speichers als auch mit der Gleitfläche zur Aufnahme von Gleitbelastungen auf die Gleitfläche in einem festen, insbesondere stoffschlüssigen Verbund stehen.

Weist der Speicher mehrere, insbesondere durch Entbinderung aus mit Metall beschichteten Platzhaltern hergestellte Hohlkörper auf, die sowohl miteinander als auch mit der Gleitfläche in einem festen Verbund stehen, dann kann ermöglicht werden, dass nicht nur der Speicher zur Erhöhung der Belastungsfähigkeit des Gleitlagers dient, sondern dass damit auch die Standzeit des Gleitlagers verbessert werden kann. Die Metall aufweisenden Schalen der Hohlkörper haben sich nämlich neben deren vergleichsweisen hohen Festigkeit auch als besonders vorteilhaft zum Austreiben von Schmierstoff aus dem Speicher herausgestellt, was auf eine besondere Wärmeleitfähigkeit der Schalen zurückgeführt werden kann. Diese kann unter anderem zu einem gleichmäßigen und schnellen Miterwärmen des Speichers mit der reibungsbedingten Erwärmung der Gleitfläche führen, so dass je nach Gleitbelastung mit einer verbesserten selbständigen Schmierung einerseits und auch mit einer erhöhten Dynamik in der Schmierung andererseits gerechnet werden kann, was zu einer erhöhten Standzeiten führen kann. Dabei kann der auszutreibende Schmierstoff zwischen den miteinander verbundenen Hohlkörpern und/oder selbst von den Hohlkörpern gespeichert werden, wodurch die miteinander in einem festen Verbund stehenden Hohlkörper auch zur Aufnahme von Schmierstoff dienen können. Außerdem ist vorstellbar, dass der feste Verbund an Hohlkörpern bei Kraftbelastungen eine geringe Verformbarkeit aufweisen kann, so dass mit einem Auspressverhalten auch die Schmierung in der Dynamik noch weiter verbessert werden kann. Insbesondere aber zeichnet sich das erfindungsgemäße Gleitlager dadurch aus, dass gegenläufige Parameter in der Optimierung - und zwar eine hohe selbständige Schmierung auf der einen Seite und hohe Belastungsfähigkeit auf der anderen Seite - gleichzeitig verbessert werden können. Die Hohlkörper stehen nämlich auch mit der Gleitfläche in einem festen Verbund, so dass diese auch zur Aufnahme von Gleitbelastungen auf die Gleitfläche dienen können. Im Gegensatz zum Stand der Technik mit Ausnehmungen im Träger muss daher eine verminderte Steifigkeit bzw. Belastbarkeit des Gleitlagers nicht in Kauf genommen werden. Das erfindungsgemäße Gleitlager kann daher auf einfache konstruktive Weise selbst bei höchster mechanischer und/oder thermischer Belastbarkeit hohe Standzeiten gewährleisten. Einfache Konstruktionsverhältnisse können sich ergeben, wenn der Verbund stoffschlüssig geschaffen wird.

Einfache Konstruktionsverhältnisse sowie eine vergleichsweise hohe Temperaturbeständigkeit des Verbunds können sich ergeben, wenn die Hohlkörper durch Sinterung sowohl miteinander als auch mit der Gleitfläche fest verbunden sind.

Weisen die in den Abmessungen im Wesentlichen gleichen Hohlkörper eine kugelförmige Form auf, dann können sich einfache Konstruktionsverhältnisse ergeben. Außerdem kann damit ein reproduzierbarer und damit in der Selbstschmierung festlegbarer bzw. bestimmbarer Speicher geschaffen werden.

Um die Festigkeit des Verbunds an Hohlkörpern erhöhen zu können, kann vorgesehen sein, dass die nebeneinander und in Lagen angeordneten Hohlkörper zumindest teilweise ein raumzentriertes Gitter ausbilden. Es kann nämlich die vergleichsweise hohe Packungsdichte an Hohlkugeln, die in Lagen auf Lücke angeordnet sind, zur Vergrößerung der Kontaktflächen zwischen den Hohlkugeln genützt werden, um so für eine verbesserte Verbindung der Hohlkugel zu sorgen. Selbst vergleichsweise hohe Gleitbelastungen können daher vom Speicher aufgenommen werden, was ein standfestes Gleitlager schaffen kann.

Bilden die durch Schüttung nebeneinander angeordneten Hohlkörper ein unregelmäßiges Gitter aus, dann kann der konstruktive Aufwand zur Herstellung des Speichers unter Berücksichtigung eines eventuellen Festigkeitsverlusts vermindert werden.

Weist wenigstens ein Hohlkörper eine offenporige Schale zur Speicherung von Schmiermittel auf, dann kann die Standzeit der Selbstschmierung der Gleitfläche weiter verbessert werden, in dem zusätzlich über die Offenporigkeit der Schale Schmiermittel vom Hohlkörper gespeichert werden kann.

Die Menge an speicherbarem Schmiermittel kann weiter erhöht werden, wenn die poröse Schale des Hohlkörpers einen Porenkanal zur Speicherung von Schmiermittel im Hohlraum aufweist. Schmiermittel kann so in den Hohlraum des Hohlkörpers eindringen, was auch die Standzeit des Gleitlagers verbessern kann.

Bildet eine über dem Speicher vorgesehene metallische Deckschicht die Gleitfläche aus, dann kann der Verbund gegenüber einem direkten Kraftauftrag geschützt werden. Insbesondere kann damit ein Abrieb des Speichers vermindert werden, so dass ein Träger mit erhöhter Standzeit geschaffen werden kann, wenn zur selbständigen Schmierung die Deckschicht durchlässig für das Schmiermittel des Speichers ist. Außerdem kann nach den vorgegebenen Belastungsanforderungen die metallische Zusammensetzung der Deckschicht unabhängiger gewählt werden, was einen modularen Aufbau des Trägers schaffen kann. So kann beispielsweise je nach Belastung eine andere Deckschicht mit dem Speicher durch beispielsweise ein Aufkleben, Sintern und/oder Zusammenlöten verbunden werden. Einfache Konstruktionsverhältnisse zur Durchlässigkeit von Schmiermittel können sich ergeben, wenn die Deckschicht offenporig ist.

Einfache Konstruktionsverhältnisse können sich weiter ergeben, wenn die Schalen der Hohlkörper zumindest teilweise die metallische Gleitfläche ausbilden. Der Verbund der Hohlkörper kann so neben seiner Funktion der Speicherung von Schmiermittel und seiner Aufgabe der Selbstschmierung auch als metallische Gleitfläche verwendet werden, wobei sich gerade diese konstruktive Ausführung als besonders vorteilhaft für die Standzeit des Gleitlagers herausgestellt hat. Dies kann unter anderem durch die Nähe des Schmierstoffspeichers zur Gleitfläche und einem damit schnelleren Ansprechen der Selbstschmierung erklärt werden. Ebenso kann damit auch die restliche metallische Gleitfläche verbessert und/oder schneller mit Schmiermittel zur Selbstschmierung versorgt werden. Des Weiteren kann im Gegensatz zum Stand der Technik trotz hoher Gleitbelastungen auch eine Vergrößerung der Bereiche zur Selbstschmierung der metallischen Gleitfläche vorgenommen werden, weil der Verbund aus Holkörpern und Träger selbst Gleitbelastungen aufnehmen kann. Es kommt daher im Gegensatz zum Stand der Technik nicht zu einer Festigkeitsreduktion, wenn der Speicher für erhöhte Schmierung eine vergrößerte Fläche von der Gleitfläche und/oder ein vergrößertes Volumen einnimmt. Hohe Festigkeit sowie eine lange Lebensdauer durch verbesserte selbständige Schmierung können daher erfindungsgemäß ein standfestes Gleitlager schaffen.

Sind die, eine metallische Gleitfläche ausbildenden Schalen abgeflacht, dann kann für eine plane Gleitfläche und damit für eine erhöhte Festigkeit des Verbunds gesorgt werden, um so die Belastungsfähigkeit des Gleitlagers zu erhöhen. Solch eine plane Gleitfläche kann beispielsweise durch Kantwerkzeuge bzw. Schneidwerkzeuge erzeugt werden. An den Hohlkörpern dadurch auftretende Kanten, die für einen Abriss eines Schmierfilms sorgen können, sind zu vernachlässigen, weil die Schalen der Hohlkörper mit deren aufgenommenen Schmierstoff für eine weitere selbständige Schmierung sorgen können.

Besonders einfache Konstruktionsverhältnisse ergeben sich, wenn der Träger aus einem Verbund an Hohlkörpern besteht, weil damit durch den Verbund nicht nur auf einfache Weise eine Gleitfläche geschaffen sondern auch der Speicher für Schmiermittel vergleichsweise einfach im Bereich der Gleitfläche für eine selbständige Schmierung vorgesehen werden kann. Außerdem kann damit ein Optimum an hoher Belastbarkeit und Standzeit durch eine hohe Eigenschmierung und durch eine vergleichsweise hohe Menge an gespeichertem Schmiermittel erreicht werden.

Die Erfindung löst außerdem die Aufgabe einer verbesserten Selbstschmierung bei einem Gleitlager damit, in dem ein metallischer zellularer Werkstoff zur Speicherung eines Schmierstoffs für eine selbständige Schmierung einer metallischen Gleitfläche des Gleitlagers verwendet wird. Hierfür muss der zellulare Werkstoff einen Verbund durch Entbinderung aus mit Metall beschichteten Platzhaltern hergestellte Hohlkörper aufweisen, die miteinander insbesondere durch eine Sinterung fest verbunden sind, um so vorteilhaft als Speicher für Schmiermittel dienen zu können.

Die Standzeit des Gleitlagers sowie die Selbstschmierung kann weiter verbessert werden, in dem die mit der Gleitfläche in einem festen Verbund stehenden Hohlkörper zur Aufnahme von Gleitbelastungen auf die Gleitfläche verwendet werden. Die Gleitlagerkräfte können so über den Verbund auf den Speicher verbessert einwirken, was zu einem stärkeren und/oder schnelleren Austreiben des Schmierstoffs führen kann.

Die Gleitfläche kann auf einfache Weise gebildet werden, in dem mehrere Schalen der Hohlkörper als metallische Gleitfläche verwendet werden.

Bildet der Verbund zumindest teilweise eine metallische Gleitfläche aus, dann kann damit ein konstruktiv einfaches Gleitlager geschaffen werden.

Werden Hohlkörper mit offenporigen Schalen verwendet, dann kann die Aufnahme von Schmiermittel verbessert bzw. dessen Schmiermenge erhöht werden, was der Standzeit des Gleitlagers förderlich sein kann. Insbesondere haben sich dafür poröse Schalen als vorteilhaft herausgestellt.

In den Figuren ist der Erfindungsgegenstand anhand von Ausführungsbeispielen beispielsweise dargestellt. Es zeigen
- Fig. 1: eine abgerissene Draufsicht auf eine Gleitfläche eines nach einem ersten Ausführungsbeispiel dargestellten Gleitlagers,
- Fig. 2: eine Schnittansicht nach II-II der Fig. 1,
- Fig. 3: eine vergrößerte und aufgerissene Teilansicht auf den in Fig. 2 dar- gestellten Verbund an Hohlkörpern des Speichers des Gleitlagers,
- Fig. 3a: eine teilweise aufgerissene und vergrößerte Ansicht auf einen in Fig. 3 dargestellten Hohlkörper mit einer offenporigen und porösen Scha- le,
- Fig. 4: ein zweites Ausführungsbeispiel mit einer zur Fig. 3 veränderten Gleitfläche,
- Fig. 4a: eine vergrößerte Ansicht auf einen in Fig. 4 dargestellten Hohlkörper mit einer offenporigen und porösen Schale,
- Fig. 5: eine Draufsicht auf ein drittes Ausführungsbeispiel,
- Fig. 6: eine teilweise dargestellte Schnittansicht nach VI-VI der Fig. 5,
- Fig. 7: ein viertes Ausführungsbeispiel in einer abgerissenen Schnittansicht und
- Fig. 8: ein fünftes Ausführungsbeispiel in einer abgerissenen Schnittansicht.

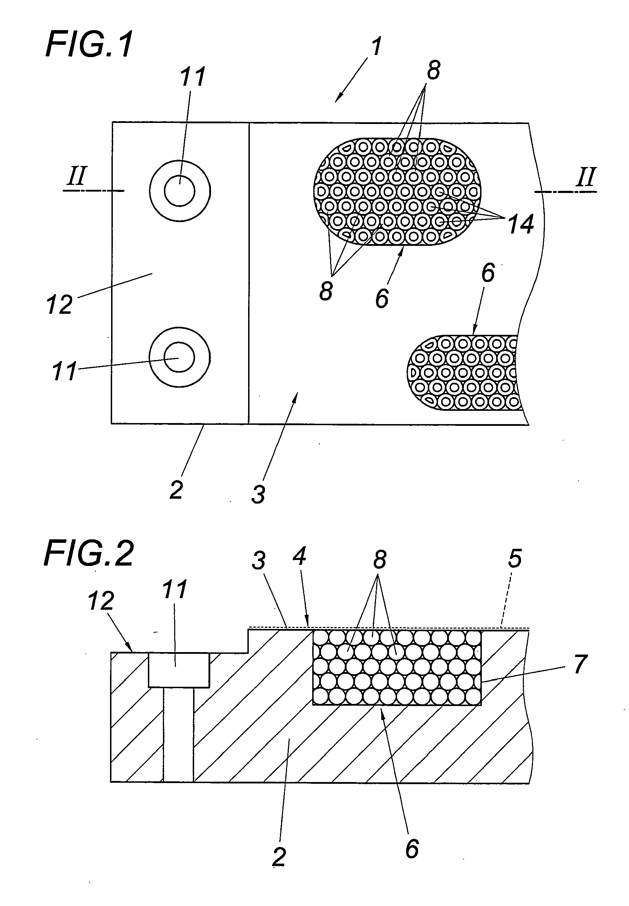

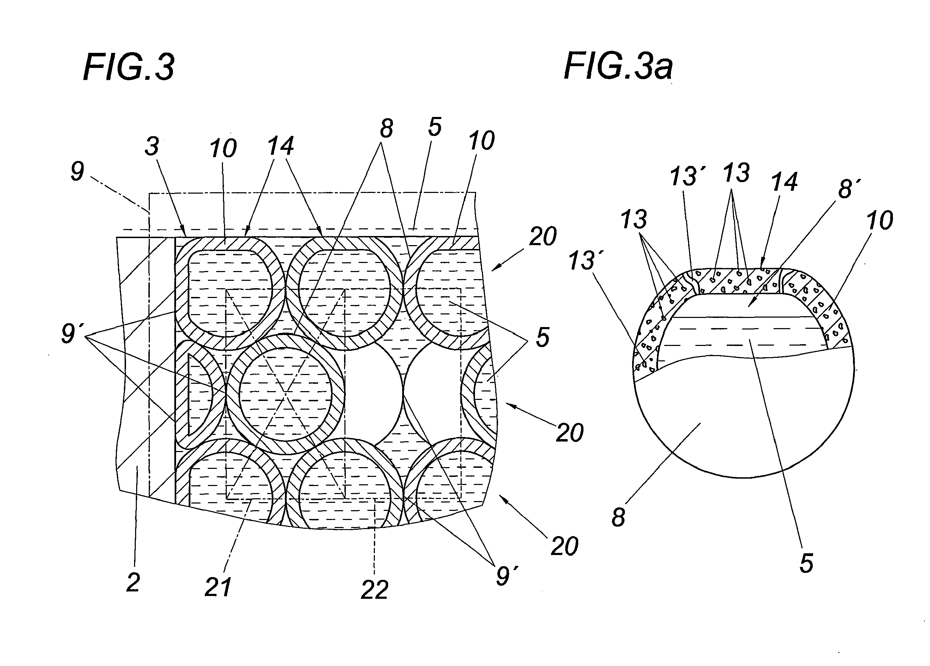

Das nach Fig. 1 beispielsweise dargestellte erste Ausführungsbeispiel eines Gleitlagers 1, weist einen zur Aufnahme von Gleitbelastungen vorgesehenen Träger 2 auf. Der Träger 2 bildet eine metallische Gleitfläche 3 aus, auf dem ein nicht dargestelltes Gegenstück des Gleitlagers 1 eine Gleitbewegung durchführen kann. Um nun zwischen den bewegten Teilen, nämlich dem Träger 2 und dem Gegenstück eine selbständige Schmierung bzw. eine Film 4 aus Schmiermittel 5 ermöglichen zu können, weist der Träger 2 einen Speicher 6 für Schmiermittel 5 auf. Insbesondere kann der Aufbau des Speichers 6 der Fig. 2 entnommen werden, wo gezeigt ist, dass der Träger 2 eine Ausnehmung 7 unterhalb der Gleitfläche 3 zur Aufnahme des Speichers 6 aufweist. Wirken nun mechanische und/oder thermische Gleitbelastungen auf die Gleitfläche 3, dann kann selbständig Schmiermittel 5 aus dem Speicher 6 austreten und auf der Gleitfläche 3 für eine reibungsreduzierte Gleitbewegung zwischen den bewegten Teilen des Gleitlagers 1 sorgen. Erfindungsgemäß weist der Speicher 6 mehrere Hohlkörper 8 auf, was der Fig. 3 besser entnommen werden kann. Die aneinander angrenzenden Hohlkörper 8 bilden mit dem Träger 2 bzw. seiner übrigen Gleitfläche 3 einen festen Verbund 9 aus. Hierfür können die aneinander angrenzenden Schalen 10 der Hohlkörper 8 mit sich und die an den Träger 2 angrenzenden Schalen 10 der Hohlkörper 8 mit dem Träger 2 bzw. seiner Gleitfläche 3 eine stoffschlüssige Verbindung 9' beispielsweise durch Verlöten, Verkleben oder Sintern eingehen. Besonders vorteilhaft für solch einen Verbund 9 ist, wenn die Hohlkörper 8 durch Entbinderung aus mit Metall beschichteten Platzhaltern bzw. durch Entbinderung aus Grünkörpern mit einer metallischen Beschichtung hergestellt werden, was nicht näher dargestellt worden ist. Der feste Verbund 9 an Speicher 6 und Gleitfläche 3 schafft so einen belastungsfähigen Träger 2, da auch zusätzlich Gleitbelastungen vom Speicher 4 aufgenommen bzw. abgetragen werden können. Es können daher vom Gleitlager 1 - trotz Vorsehen eines Speichers 6 für Schmiermittel 5 - hohe Gleitbelastungen sowie hohe Standzeiten ermöglicht werden. Dem Träger 2 sind zum Abtragen der Gleitbelastungen Mittel zur Montage zugeordnet sein, was am Träger 2 in Form von Öffnungen 11 eines Montageflansches 12 nach Fig. 1 dargestellt ist.

Die Hohlkörper 8 weisen eine kugelförmige Form auf und sind in den Abmessungen im Wesentlichen gleich ausgebildet. Damit können wie in Fig. 2 und 3 dargestellt die nebeneinander angeordneten Hohlkörper 8 in Lagen 20 derart angeordnet werden, dass sich ein raumzentriertes Gitter 21 ergeben kann, was in Fig. 3 angedeutet worden ist. Es ergibt sich so eine dichte Packung an Hohlkörpern 8, weil die Lagen 20 der Hohlkörper 8 je auf Lücke angeordnet sind, so dass erhöhte Belastungen vom Speicher 6 aufgenommen werden können. Es ist aber auch vorstellbar, dass die durch eine nicht dargestellte Schüttung die nebeneinander angeordneten Hohlkörper 8 ein unregelmäßiges Gitter 22 ausbilden, was in der Fig. 3 durch eine Lücke rechts des raumzentrierten Gitters 21 erkannt werden kann.

Außerdem sind die Hohlkörper 8 mit einer durchgehend porösen Schale 10 versehen. Eine teilweise poröse Schale 10 ist vorstellbar, um die Festigkeit der Hohlkörper 8 bzw. des Verbunds 9 zu erhöhen, was jedoch nicht dargestellt worden ist. Da die Schale 10 auch offenporig ist, kann die Menge an speicherbarem Schmiermittel 5 erhöht werden, weil durch die Poren 13 Schmiermittel 5 in der Schale gespeichert werden kann. Vorteilhaft ist die Schale 10 derart offenporig und porös, dass einen Porenkanal 13' zur Speicherung von Schmiermittel 5 im Hohlraum 8' der Hohlkörper 8 möglich ist. Der Schmiermittel 5 kann so einerseits in den Poren 13 der Schale 10 oder über den Porenkanal 13 in den Hohlraum der Hohlkörper 8 gelangen, was insbesondere der Fig. 3a entnommen werden kann.

Damit der Verbund 9 an Hohlkörpern auch als Gleitfläche 3 dienen kann, ragen die Schalen 10 der Hohlkörper 8 aus der Ausnehmung 7 zur Gleitfläche 3 vor, um damit eine Gleitfläche 3 ausbilden zu können. Neben der selbständigen Schmierung können daher durch den Verbund 9 Gleitbelastungen vom Speicher 6 direkt aufgenommen werden.

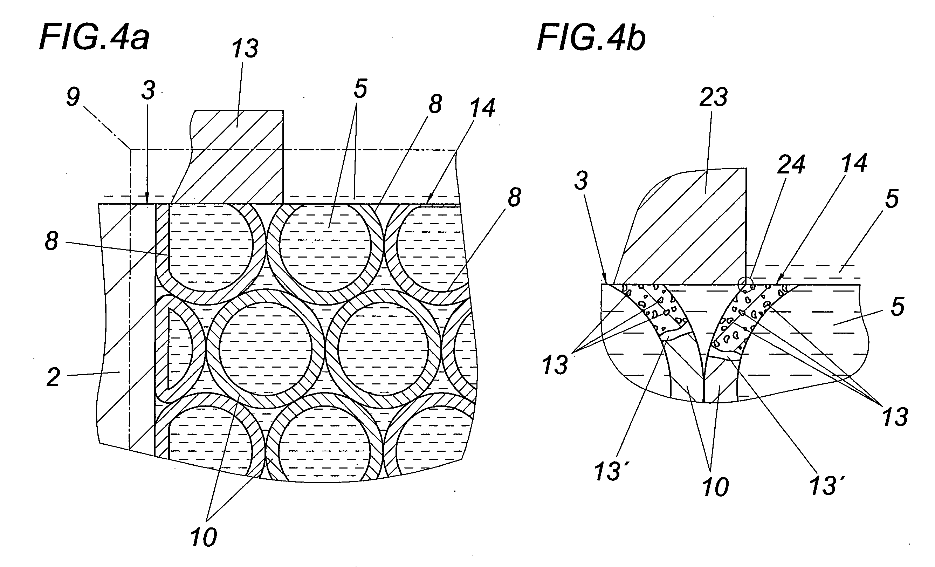

Vorteilhafte Gleitverhältnisse werden geschaffen, in dem die, eine metallische Gleitfläche 3 ausbildenden Schalen 10 des Verbunds 9 abgeflacht sind. Solch eine Abflachung 14, die beispielsweise in Fig. 3a zu erkennen ist, kann beispielsweise durch einen Pressvorgang beim Sintern geschaffen werden. Auch sind Abflachungen 14 mit Hilfe eines Schneideverfahren vorstellbar, bei dem ein Überstand der Hohlkörper 8 abgetrennt wird. Solch ein Gleitlager 1 kann beispielsweise der Fig. 4 als zweites Ausführungsbeispiel entnommen werden. So ist dort erkennbar, dass eine Vielzahl an aufgeschnittenen Hohlkörpern Abflachungen 14 für die Gleitfläche 3 des Gegenstücks 23 ausbilden. Durch die Abflachungen 14 müssen jedoch Kantenberührungen mit vergleichweise scharfen Kanten 24 bei Gleitbewegungen in Kauf genommen werden, was der Fig. 4a zu entnehmen ist. Derartige Kantenberührungen führen jedoch zu einem Abriss des Schmiermittels 5 bzw. Schmierfilms, so dass mit erhöhtem Verschleiß gerechnet werden kann. Erfindungsgemäß sind jedoch die Schalen 10 wenigstens offenporig, so dass trotz des Abreißens des Schmierfilms an der Kante 24 über die Poren 13 Schmierstoff 5 der Gleitfläche 3 zugeführt werden kann.

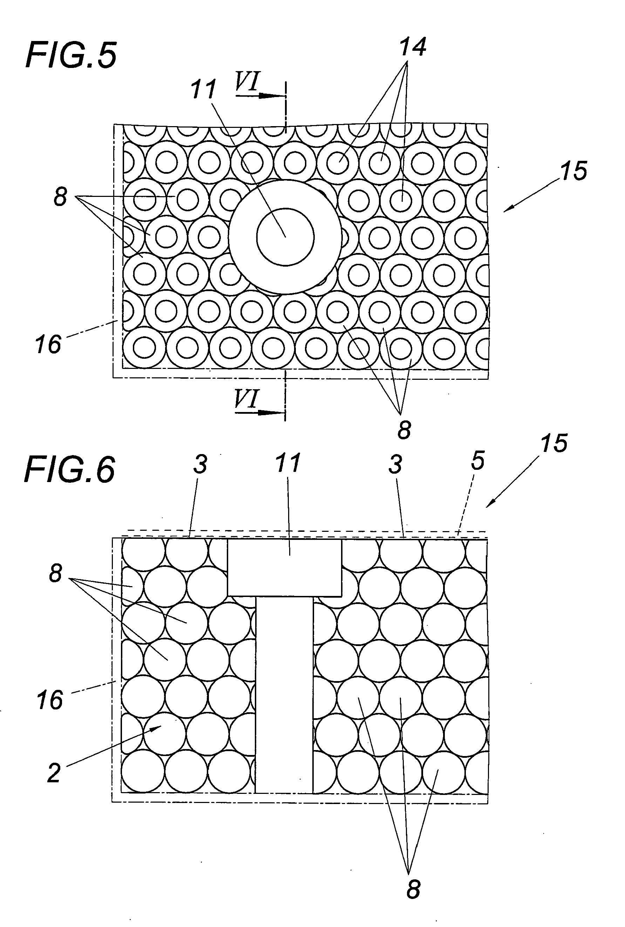

Zum Unterschied zum Gleitlager 1 nach Fig. 1 besteht der Träger 2 des beispielsweise nach Fig. 5 und 6 dargestellten Ausführungsbeispiels zu einem Gleitlager 15 nun vollständig aus einem Verbund 9 an Hohlkörpern 8. Die Gleitfläche 3 wird daher ausschließlich von den metallischen Schalen 10 der Hohlkörper 8 gebildet. Um einen Verlust an Schmiermittel 5 zu vermeiden, kann der Träger 2 mit einer für Schmiermittel 5 dichten Begrenzungsschicht 16 wannenförmig umfasst sein.

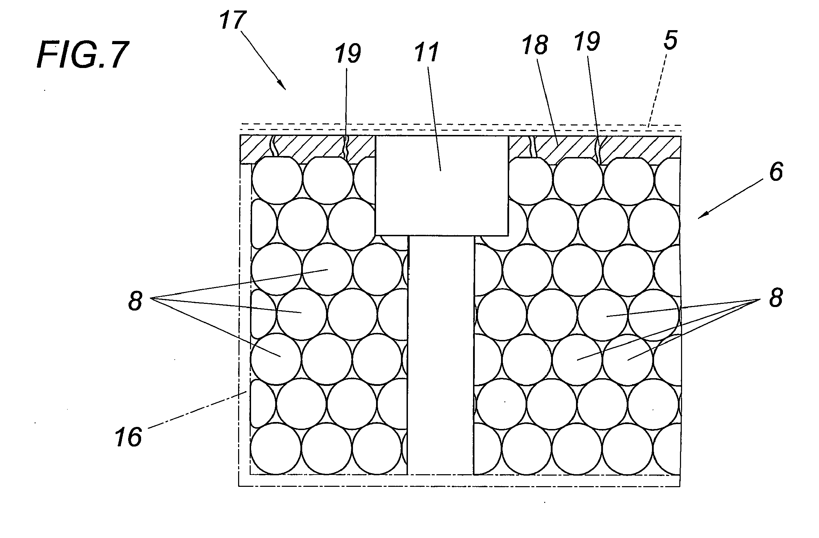

Im nach Fig. 7 beispielsweise dargestellten Ausführungsbeispiel zu einem weiteren Gleitlager 17 ist im Vergleich zum Gleitlager 15 nach Fig. 5 und 6 über den Hohlkörpern 8 eine Deckschicht 18 vorgesehen. Die Deckschicht 18 formt die Gleitfläche 3 des Trägers 2 und weist Kanäle 19 zum Durchtreten von Schmiermittel 5 vom Speicher 6 auf die Gleitfläche 3 auf.

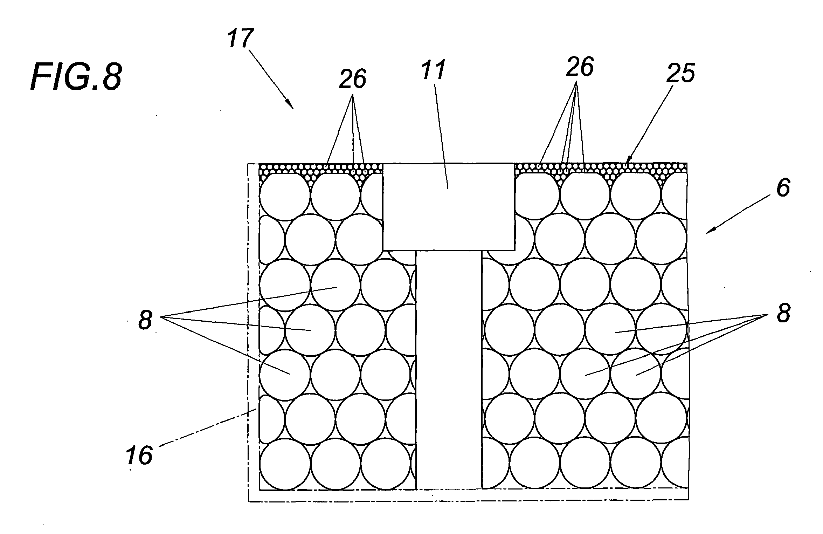

Eine andere Deckschicht 25, als die in Fig. 7 dargestellte Deckschicht 18, ist beispielsweise im letzten Ausführungsbeispiel nach Fig. 8 gezeigt. Hier formen eine Vielzahl an kleineren Hohlkörpern 26 eine Deckschicht 25 aus, um damit für eine verbesserte Aufnahme an Gleitbelastungen sorgen zu können.

## Patentansprüche

1. Gleitlager mit einem zum Aufnehmen von Gleitbelastungen vorgesehenen Träger (2), der eine wenigstens teilweise metallische Gleitfläche (3) sowie einen Speicher (6) zur Aufnahme von Schmiermittel (5) zum selbständigen Schmieren der Gleitfläche (3) aufweist, **dadurch gekennzeichnet, dass** der Speicher (6) mehrere, insbesondere durch Entbinderung aus mit Metall beschichteten Platzhaltern hergestellte Hohlkörper (8) aufweist, die sowohl miteinander zur Aufnahme von Schmiermittel (5) des Speichers (6) als auch mit der Gleitfläche (3) zur Aufnahme von Gleitbelastungen auf die Gleitfläche (3) in einem festen, insbesondere stoffschlüssigen Verbund (9) stehen.

2. Gleitlager nach Anspruch 1, **dadurch gekennzeichnet, dass** die Hohlkörper (8) durch Sinterung sowohl miteinander als auch mit der Gleitfläche (3) fest verbunden sind.

3. Gleitlager nach Anspruch 1 oder 2, **dadurch gekennzeichnet, dass** die in den Abmessungen im Wesentlichen gleichen Hohlkörper (8) eine kugelförmige Form aufweisen.

4. Gleitlager nach Anspruch 1, 2 oder 3, **dadurch gekennzeichnet, dass** die nebeneinander und in Lagen (20) angeordneten Hohlkörper (8) zumindest teilweise ein raumzentriertes Gitter (21) ausbilden.

5. Gleitlager nach Anspruch 1, 2 oder 3, **dadurch gekennzeichnet, dass** die durch Schüttung nebeneinander angeordneten Hohlkörper (8) ein unregelmäßiges Gitter (22) ausbilden.

6. Gleitlager nach einem der Ansprüche 1 bis 5, **dadurch gekennzeichnet, dass** wenigstens ein Hohlkörper (8) eine offenporige Schale (10) zur Speicherung von Schmiermittel (6) aufweist.

7. Gleitlager nach Anspruch 6, **dadurch gekennzeichnet, dass** die poröse Schale (10) des Hohlkörpers (8) einen Porenkanal (13') zur Speicherung von Schmiermittel (5) im Hohlraum (8') aufweist.

8. Gleitlager nach einem der Ansprüche 1 bis 7, **dadurch gekennzeichnet, dass** eine über dem Speicher (6) vorgesehene metallische Deckschicht (18) die Gleitfläche (3) ausbildet, wobei die, insbesondere offenporige Deckschicht (18) durchlässig für Schmiermittel (5) des Speichers (6) ist.

9. Gleitlager nach einem der Ansprüche 1 bis 7, **dadurch gekennzeichnet, dass** wenigstens eine Schale (10) der Hohlkörper (8) zumindest teilweise die metallische Gleitfläche (3) ausbilden.

10. Gleitlager nach Anspruch 9, **dadurch gekennzeichnet, dass** die eine metallische Gleitfläche (3) ausbildenden Schalen (10) abgeflacht sind.

11. Gleitlager nach Anspruch 9 oder 10, **dadurch gekennzeichnet, dass** der Träger (2) aus Hohlkörpern (8) besteht.

12. Verwendung eines metallischen zellularen Werkstoffs, aufweisend durch Entbinderung aus mit Metall beschichteten Platzhaltern hergestellte Hohlkörper (8), die miteinander insbesondere durch Sinterung fest verbunden sind, zur Speicherung eines Schmierstoffs (5) für eine selbständige Schmierung einer zumindest teilweisen metallischen Gleitfläche (3) eines Gleitlagers (1).

13. Verwendung nach Anspruch 12, **dadurch gekennzeichnet, dass** die mit der Gleitfläche (3) in einem festen Verbund (9) stehenden Hohlkörper (8) zur Aufnahme von Gleitbelastungen auf die Gleitfläche (3) verwendet werden.

14. Verwendung nach Anspruch 12 oder 13, **dadurch gekennzeichnet, dass** mehrere Schalen (10) der Hohlkörper (8) als metallische Gleitfläche (3) verwendet werden.

15. Verwendung nach Anspruch 12, 13 oder 14, **dadurch gekennzeichnet, dass** zur verbesserten Aufnahme von Schmiermittel (5) Hohlkörper (8) mit offenporigen und insbesondere porösen Schalen (10) verwendet werden.
